# EUROPEAN PATENT APPLICATION

(11) **EP 2 048 737 A1**
(43) Date of publication of application: **15.04.2009**
(21) Application number: 07828159.9
(22) Date of filing: 13.07.2007
(51) Int. Cl.: H01P 3/08, H01P 7/08, H05K 1/02

(54) **CHIP DEVICE**

(30) Priority: 02.08.2006 JP 2006211004
(71) Applicant: Murata Manufacturing Co. Ltd., Nagaokakyo-shi, Kyoto 617-8555 (JP)
(72) Inventor: TSUJIGUCHI, Tatsuya, Nagaokakyo-shi, Kyoto 6178555 (JP); KITAICHI, Yukihiro, Nagaokakyo-shi, Kyoto 6178555 (JP)
(74) Representative: Schoppe, Fritz
(86) International application number: PCT/JP2007/063992
(87) International publication number: WO 2008/023506

(57) **Abstract**

A chip component (100) is obtained by laminating a dielectric substrate (1), a first insulating layer (2) provided on a principal face of the dielectric substrate (1), and a second insulating layer (3) covering the entirety of the first insulating layer (2). A circuit pattern (12) including a resonance line is provided in an interface between the dielectric substrate (1) and the first insulating layer (2). In the first insulating layer (2), a plurality of through holes (H) are aligned along an extending direction of the circuit pattern (12) at locations facing the area within the boundary of the circuit pattern (12).

## Description

### Technical Field

The present invention relates to chip components having a circuit pattern on a dielectric substrate.

### Background Art

A photolithographic method has been known as a method for producing chip components. In the method, highly accurate circuit patterns are formed by printing, exposing, and developing a photosensitive conductive paste on a dielectric substrate (See Patent Document 1).

Such a chip component provided with a circuit pattern by employing the photolithographic method has a low adhesion strength for the circuit pattern over the dielectric substrate. This may result in the circuit pattern becoming detached from the substrate due to thermal factors or mechanical factors. Once such detachment occurs in the circuit pattern, the conductivity of the circuit pattern is degraded, thus degrading the reliability of the chip component.

For avoiding such circuit pattern detachment and improving the environment resistance to humidity, temperature, mechanical damage, and the like, there has been known a technique in which an insulating layer (a glass layer) is formed by coating an insulating paste so as to cover the dielectric substrate and the circuit pattern, and baking the insulating paste. This technique prevents the circuit pattern from becoming detached by coating the circuit pattern with the insulating layer whose adhesion strength to the dielectric substrate is higher than the adhesion strength of the circuit pattern to the dielectric substrate.
Patent Document: Japanese Unexamined Patent Application Publication No. 2001-210541

### Disclosure of Invention

### Problems to be Solved by the Invention

Typically, an insulator constituting an insulating layer has a different linear expansion coefficient from a conductor constituting a circuit pattern. The linear expansion coefficient of the insulator is also different from that of a dielectric constituting a dielectric substrate. When a chip component is coated with the insulating layer, a stress remains in the insulating layer due to thermal stress generated during the heat treatment. When gas bubbles generated by baking a resin agent contained in an insulating paste remain in the insulating layer, a large amount of stress remains in the vicinity of the bubbles.

When the residual stress acts on the circuit pattern, the circuit pattern is deformed or becomes partially detached. This degrades the electrical characteristics of the chip component. When the component is used at higher frequencies in particular, the frequency characteristics thereof are greatly changed, which makes it difficult to obtain desired frequency characteristics. Variations in deformation of the circuit patterns and the locations at which such partial detachment occurs in the circuit patterns among the products (the chip components) create product-to-product variations in the electrical characteristics and the frequency characteristics. This decreases the yield rate.

It is an object of the present invention to provide chip components for which the number of occurrences of deformation and partial detachment is decreased compared to the known components.

### Means for Solving the Problems

(1) In the present invention, a chip component includes a dielectric substrate and a first insulating layer covering a principal face of the dielectric substrate. A circuit pattern is provided in an interface between the dielectric substrate and the first insulating layer. The first insulating layer includes a through hole having no conductor therein.
   Since a hole including no conductor is provided in the first insulating layer, the gas generated during the baking of the first insulating layer or the like is evacuated through the hole, which decreases the number and the sizes of gas bubbles in the vicinity of the hole after the baking. Since the deformation of the first insulating layer due to the baking of the first insulating layer and the following heat treatment is absorbed at the hole, the residual stress in the first insulating layer is decreased. Therefore, the stress acting on the circuit pattern from the first insulating layer is also reduced. This decreases the occurrence of the deformation of the circuit pattern compared to the known chip components, which can prevent the circuit pattern from being partially detached.
(2) The present invention is provided with a second insulating layer covering the entirety of the first insulating layer.
   In this configuration, the circuit pattern exposed from the through hole of the first insulating layer and the first insulating layer are coated by providing the second insulating layer. The environment resistances of the circuit pattern and the first insulating layer are increased.
(3) The through hole of the present invention is provided in a location facing the area within the boundary of the circuit pattern.
   In this configuration, the stress and the gas bubbles that remain in the vicinity of the circuit pattern in the first insulating layer can be effectively decreased by providing the through hole at a location facing the circuit pattern. In addition, the detachment of the circuit pattern occurring from the external boundary area to the internal boundary thereof can be prevented by pressing an edge part of the circuit pattern with the outer edge of the through hole.
(4) A chip component according to the present invention is obtained by aligning a plurality of the through holes along an extending direction of the circuit pattern.
   In this configuration, the deformation of the first insulating layer can be decreased along the circuit pattern.
(5) A chip component according to the present invention includes a non-electrode containing portion within the boundary of the circuit pattern. The dielectric substrate and the first insulating layer contact each other via the non-electrode containing portion.
   In general, the adhesion strength for the insulator constituting the first insulating layer over the conductor constituting the circuit pattern is lower than the adhesion strength for the insulator constituting the first insulating layer over the dielectric constituting the dielectric substrate. Therefore, great adhesion strength can be distributed inside the circuit pattern by providing the non-electrode containing portion inside the circuit pattern. This can effectively prevent the circuit pattern from being detached.
(6) A chip component according to the present invention is obtained by providing side electrodes in side faces of at least the dielectric substrate and the first insulating layer.
   Generally speaking, when the side electrode is provided, the baking of the first insulating layer is applied to the dielectric substrate and then the side electrode is baked. The heat stress is applied to the first insulating layer when the side electrode is baked. However, the deformation and the detachment of the circuit pattern can be prevented by adopting the configuration of the present invention even when the side electrode is provided.
(7) A chip component of the present invention constitutes a resonance line of a stripline resonator formed by using the circuit pattern.

In typical stripline resonators, variations in resonance characteristics due to the deformation or the detachment of the circuit pattern are great. This configuration enables variations in resonance characteristics of the chip component including the stripline resonator to be prevented.

### Advantages of the Invention

The present invention can provide a chip component in which the number of occurrences of the deformation and the detachment of the circuit pattern is decreased. In addition, it can prevent a decrease in the yield rate and the product-to-product variations in the electrical characteristics, the frequency characteristics, and the like.

### Brief Description of Drawings

Fig. 1 includes of perspective views showing one example of a chip component;
Fig. 2 is an exploded perspective view of the chip component;
Fig. 3 includes of views showing three surfaces of the chip component;
Fig. 4 includes of views illustrating a process of producing the chip component; and
Fig. 5 includes of views illustrating another layout of the chip component.

### Reference Numerals

- 1: dielectric substrate
- 2: first glass layer
- 3: second glass layer
- 4,5: side electrodes
- 12: circuit pattern
- 13: lower face electrode
- 14, 15, 24, 25, 34, 35: side electrode pattern
- 16: terminal electrodes
- 31, 32: protruding electrodes
- 100: chip component
- 101: dielectric motherboard
- 131: circular electrode
- H: Through Holes

### Best Modes for Carrying Out the Invention

A chip component according to a first embodiment of the present invention is described with reference to drawings. The Cartesian coordinate system (X-Y-Z axes) shown in the drawings is employed for the description.

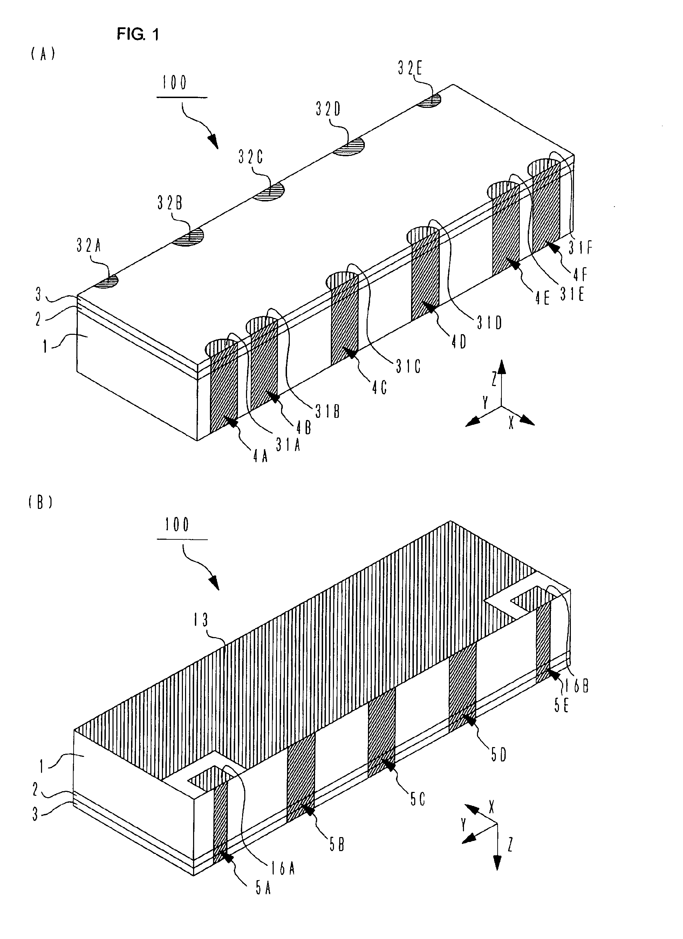

Fig. 1 consists of external views of a chip component 100; Fig. 1(A) is a perspective view obtained by disposing the chip component 100 so that the front end thereof faces the front in the left of the drawing; and Fig. 1(B) is a perspective view obtained by rotating the chip component 100 around the Y-axis by 180 degrees from the position thereof in Fig. 1(A).

The chip component 100 used in the description of the present embodiment is a rectangular parallelepiped chip filter component in which an upper principal face of a rectangular flat plate dielectric substrate 1 is coated with a first glass layer 2 and an upper principal face of the first glass layer is coated with a second glass layer 3. A filter is constructed by providing a circuit pattern (not shown) of a stripline resonator between the dielectric substrate 1 and the first glass layer 2. The structure of the circuit pattern is described later.

In the chip component 100, the substrate thickness (the Z-axis dimension) of the dielectric substrate 1 is 500 µm, the thickness (the Z-axis dimension) of the first glass layer 2 is 15 to 30 µm, and the thickness (the Z-axis dimension) of the second glass layer 3 is 15 to 30 µm. The outer dimensions of the chip component 100 are approximately 9.5mm in the X-axis dimension, approximately 2.2mm in the Y-axis dimension, and approximately 0.56mm in the Z-axis dimension. These provide a small chip component for realizing GHz band filter characteristics.

The dielectric substrate 1 is a substrate, with a relative permittivity of 110, which includes a ceramic dielectric, such as titanium oxide.

The first glass layer 2 includes insulators, such as crystalline SiO₂ and borosilicate glass. This first glass layer 2 is formed using a photolithographic method. The composition of the first glass layer 2 is adjusted so that the linear expansion coefficient thereof is generally equal to that of the dielectric constituting the dielectric substrate 1. This decreases the thermal stress between the dielectric substrate 1 and the first glass layer 2.

The second glass layer 3 is formed by causing an inorganic pigment, such as Al₂O₃ to be included in the insulator, such as crystalline SiO₂ and borosilicate glass. The inorganic pigment included in the second glass layer 3 blocks light. Due to this light-blocking effect, the product name or the like (not shown) can be printed on the surface thereof.

Alternatively, embossment printing on the second glass layer 3 is preferred. In addition, the second glass layer 3 and the first glass layer 2 may contain the inorganic pigments whose colors can sufficiently absorb ultraviolet rays. An increase in the absorption efficiency of the ultraviolet rays and the like facilitates fine patterning employing the photolithographic method. Note that a predetermined linear expansion coefficient may not be realized with some types of inorganic pigments however. The composition and the dimensions of each of the dielectric substrate 1, the first glass layer 2, and the second glass layer 2 may be appropriately set considering required filter characteristics, environment resistance, and adhesion strength between the dielectric substrate and the glass layer.

A plurality of protruding electrodes 31A to 31F and 32A to 32E are formed on an upper principal face of the second glass layer 3. The protruding electrodes 31A to 31F and 32A to 32E are electrodes that protrude into the principal face when after-mentioned side electrodes are printed. These electrodes may not be generated under some printing conditions. The electrodes also protrude to the bottom of the principal face of the chip component 100 when the side electrodes are printed. The electrodes protruding to the bottom of the principal face are unified with a lower face electrode 13 and terminal electrodes 16A and 16B.

The glass layer 2 and the glass layer 3 are laminated on the top of the principal face of the substrate 1. This prevents the protruding electrodes 31A to 31F and 32A to 32E from causing a short circuit in an area in which wiring connection is not required in the principal face pattern. The glass layers 2 and 3 increase the environment resistance of the component 100 to thermal factors generated when the component is in use or external mechanical factors.

The lower principal face of the dielectric substrate 1 is provided with the lower face electrode 13 and the terminal electrodes 16A and 16B. The lower face electrode 13 is connected to the ground potential when the chip component 100 is mounted in a mounting substrate. The terminal electrodes 16A and 16B are connected to highfrequency signal input/output terminals when the chip component 100 is mounted in the mounting substrate. The lower face electrode 13 is provided so as to cover a generally entire lower principal face of the dielectric substrate 1. The terminal electrodes 16A and 16B are provided in the vicinity of the two corresponding corners contacting the left side face so as to be separated from the lower face electrode 13. The lower face electrode 13 and the terminal electrodes 16A and 16B are electrodes of approximately 15 µm thickness (in the Z-axis direction) formed by printing a conductive paste using the screen printing or the like, and baking it.

The right side face and the left side face of the chip component 100 are provided with the side electrodes 4A to 4F and the side electrodes 5A and 5E, respectively. The side electrodes 4A to 4F and 5A to 5E establish connections between a circuit pattern (not shown) on an interface between the dielectric substrate 1 and the first glass layer 2, and the lower face electrode 13 or the terminal electrodes 16A and 16B. These electrodes are approximately 15 µm in thickness (in the X-axis direction) and are rectangular extending in the Z-axis direction from the lower principal face of the dielectric substrate 1 to the upper principal face of the second glass layer 3. These are formed through printing, such as the screen printing, and baking. The side electrodes 4A to 4F correspondingly establish connections between the protruding electrodes 31A to 31F and the lower face electrode 13. The side electrodes 5B to 5D correspondingly establish connections between the protruding electrodes 32B to 32D and the lower face electrode 13. The side electrodes 5A and 5E establish connections between the side electrodes 32A and 32E, and the terminal electrodes 16A and 16B. Alternatively, instead of providing the side electrodes 4A to 4F and 5A to 5E, through holes penetrating through the dielectric substrate 1 may be provided so that the connection between the circuit pattern and the lower face electrode 13 or the connections between the circuit pattern and the terminal electrodes 16A and 16B are established.

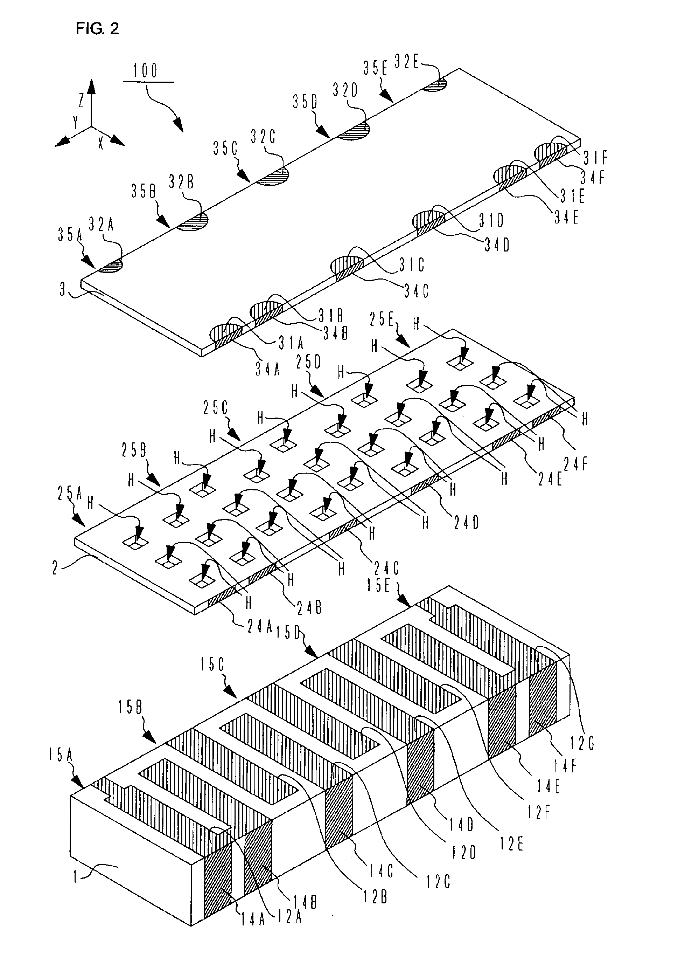

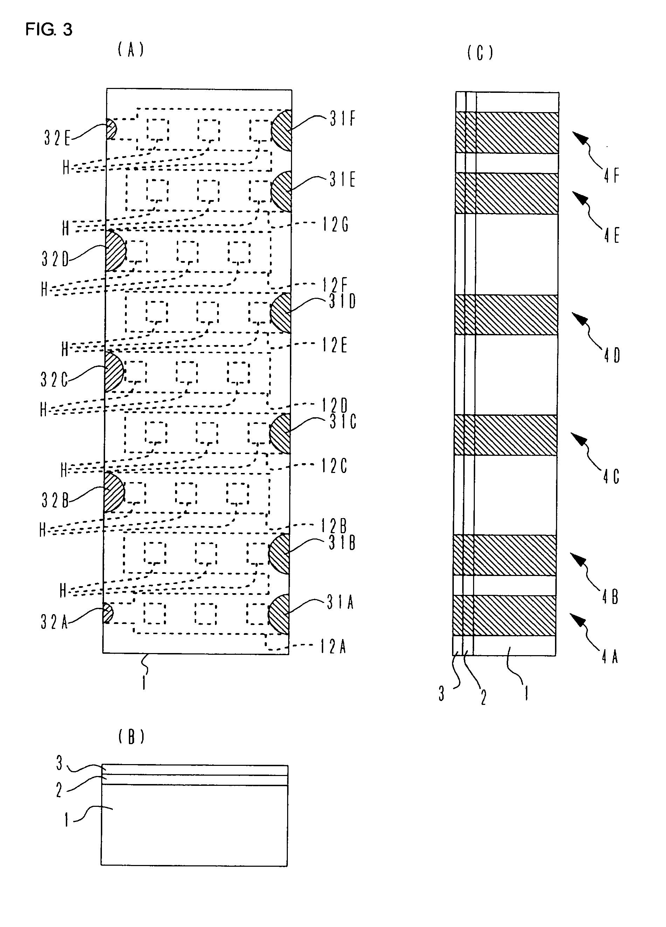

Fig. 2 illustrates an exploded perspective view of the chip component 100. Fig. 3 consists of views illustrating three surfaces of the chip component 100. Fig. 3(A) is a view showing the upper principal face thereof; Fig. 3(B) is a front view thereof; and Fig. 3(C) is a right-side view thereof.

The structure of the dielectric substrate 1 is described.

Side electrode patterns 14A to 14F constituting the side electrodes 4A to 4F are provided in the right side face of the dielectric substrate 1. A plurality of side electrode patterns 15A to 15E constituting the side electrodes 5A to 5E is provided in the left side face. Circuit patterns 12A to 12G are formed in the upper principal face of the dielectric substrate 1. The circuit patterns 12A to 12G are silver electrodes, each of which has an electrode thickness (the Z-axis dimension) of approximately 6 µm, and each of which is formed by the photolithographic method using a photosensitive silver paste. Each of the circuit patterns 12A to 12G constitutes a quarter-wavelength resonator.

The circuit pattern 12A is a silver electrode. To be more specific, a shape is obtained by disposing two rectangular electrodes in parallel and connecting them in the right side of the upper principal face of the dielectric substrate 1. The two rectangular electrodes have a shape in which the side electrode patterns 14A and 14B extend to the upper principal face, the width of each thereof remaining unchanged. These two rectangular electrodes each constitute a microstrip line resonator along with the lower face electrode 13. These rectangular electrodes are connected to the lower face electrode 13 via the side electrode patterns 14A and 14B to be comb-line coupled with each other. Of the two stripline resonators in the circuit pattern 12A, the stripline resonator in the front side allows an open end thereof to be connected to the terminal electrode 16A via the side electrode pattern 15A.

The circuit pattern 12G is also a silver electrode that has generally the same shape as the circuit pattern 12A. To be more specific, a shape is obtained by disposing two rectangular electrodes in parallel and connecting them in the right side of the upper principal face of the dielectric substrate 1. The two rectangular electrodes have a shape in which the side electrode patterns 14E and 14F extend to the upper principal face, the width of each thereof remaining unchanged. These two rectangular electrodes each constitute a microstrip line resonator along with the lower face electrode 13. These rectangular electrodes are correspondingly connected to the lower face electrode 13 via the side electrode patterns 14E and 14F to be comb-line coupled with each other. Of the two stripline resonators in the circuit pattern 12G, the stripline resonator in the rear side allows an open end thereof to be connected to the terminal electrode 16B via the side electrode pattern 15E.

The circuit patterns 12B to 12F each are rectangular silver electrodes and each constitute a microstrip line resonator along with the lower face electrode 13. The circuit patterns 12C and 12E are connected to the lower face electrode 13 via the side electrode patterns 14C and 14D, respectively. The circuit patterns 12B, 12D, and 12F are connected to the lower face electrode 13 via the side electrode patterns 15B, 15C, and 15D, respectively.

The electrode dimensions (the line widths) and the arranged intervals (the line intervals) of the circuit patterns 12A to 12G in the Y-axis direction are adjusted so that required frequency characteristics are realized. This means that the line widths and the line intervals are not necessarily equal. In this case, the line widths of the striplines are approximately 1000 µm except for the ones at the ends.

The two microstrip line resonators in the circuit pattern 12A are comb-line coupled. Interdigital coupling is achieved between the microstrip line resonator in the rear side of the circuit pattern 12A and the microstrip line resonator of the circuit pattern 12B. Interdigital coupling is achieved between the microstrip line resonator of the circuit pattern 12B and the microstrip line resonator of the circuit pattern 12C. Interdigital coupling is achieved between the microstrip line resonator of the circuit pattern 12C and the microstrip line resonator of the circuit pattern 12D. Interdigital coupling is achieved between the microstrip line resonator of the circuit pattern 12D and the microstrip line resonator of the circuit pattern 12E. Interdigital coupling is achieved between the microstrip line resonator of the circuit pattern 12E and the microstrip line resonator of the circuit pattern 12F. Interdigital coupling is achieved between the microstrip line resonator of the circuit pattern 12F and the microstrip line resonator in the front side of the circuit pattern 12G. The two microstrip line resonators of the circuit pattern 12G are comb-line coupled with each other.

Therefore, the present chip component forms a bandpass filter provided with a nine-staged resonator. The shapes of the circuit patterns 12A to 12G comply with product specifications. Each of the patterns may take any shape in accordance with the product specifications. Other than the filters, the chip component can be applied to circuit patterns with a variety of shapes. In particular, it is preferable that the component is applied to a component employing the resonance generated by the circuit pattern, such as a filter, a balun, an oscillator, or an LC resonator.

The structure of the first glass layer 2 is described.

The right side face of the first glass layer 2 is provided with side electrode patterns 24A to 24F constituting the side electrodes 4A to 4F. The left side face is provided with side electrode patterns 25A to 25E constituting the side electrodes 5A to 5E.

The first glass layer 2 is provided with a plurality of through holes H whose locations correspond to the circuit patterns 12A to 12G provided in the dielectric substrate 1. This first glass layer 2 is formed by the photolithographic method using a photosensitive glass paste. Use of the photosensitive glass paste enables the through holes H to be formed by exposure. Here, three of the through holes H are arranged in the longitudinal direction of each circuit pattern (stripline). In the longitudinal and lateral dimensions observed from the principal face, each of the through holes H has a rounded-off square outline with sides of approximately 800 µm, which is less than 1000 µm, the dimension in the lateral direction of the corresponding circuit pattern. The through holes are each provided approximately 100 µm apart from the corresponding edges of adjacent ones in the lateral direction of the corresponding circuit pattern. The edges of each hole in the lateral direction of the corresponding circuit pattern are covered with the outer glass.

The first glass layer 2 provided with through holes H generated in this manner is laminated on the dielectric substrate 1 to be tightly adhered thereto. This decreases the sizes of and the number of gas bubbles (not shown) adjacent to the through holes H in the chip component 100 according to the present embodiment. The stress in the vicinity of the circuit patterns is decreased. The tight adhesions between the dielectric substrate 1 and the circuit patterns 12A to 12G are therefore maintained. The environment resistances of the circuit patterns 12A to 12G to humidity, temperature, mechanical damage, and the like are high. The effects due to the structure of the present invention are equally obtained regardless of the thickness of the first glass layer 2. The through holes H are not necessarily configured to be square. The through holes H may be configured to be rectangular, circular, or polygonal instead of square.

If the through holes H are not provided, the density of the adhesion between the first glass layer 2 and the dielectric substrate 1 is reduced particularly in a case in which the dimension of the circuit pattern in the lateral direction thereof is equal to or more than approximately 400 µm. This makes it difficult to implement the chip component 100 with practical filter characteristics. Use of the through holes according to the present invention, however, enables the chip component 100 to be implemented with practical filter characteristics.

The structure of the second glass layer 3 is described.

The second glass layer 3 is a glass layer with light blocking effect formed by screen-printing a glass paste and baking it. The right side of the second glass layer 3 is provided with side electrode patterns 34A to 34F constituting the side electrodes 4A to 4F. The left side of the second glass layer 3 is provided with a plurality of side electrode patterns 35A to 35E constituting the side electrodes 5A to 5E. The protruding electrodes 31A to 31F and 32A to 32E are formed on the upper principal face. By providing the second glass layer 3 with light blocking effect, printing can be performed on the surface. In addition, the circuit pattern and the like cannot be seen from the surface, which gives high confidentiality.

With the dielectric substrate 1, the first glass layer 2, and the second glass layer 3, the chip component 100 according to the present embodiment is constructed. Since the first glass layer 2 and the second insulating layer are formed so as to cover the circuit patterns 12A to 12G, the chip component with high environment resistance to humidity, temperature, mechanical damage, and the like is constructed. Providing a plurality of through holes H decreases the occurrence of deformation and detachment of the circuit patterns of the chip component 100.

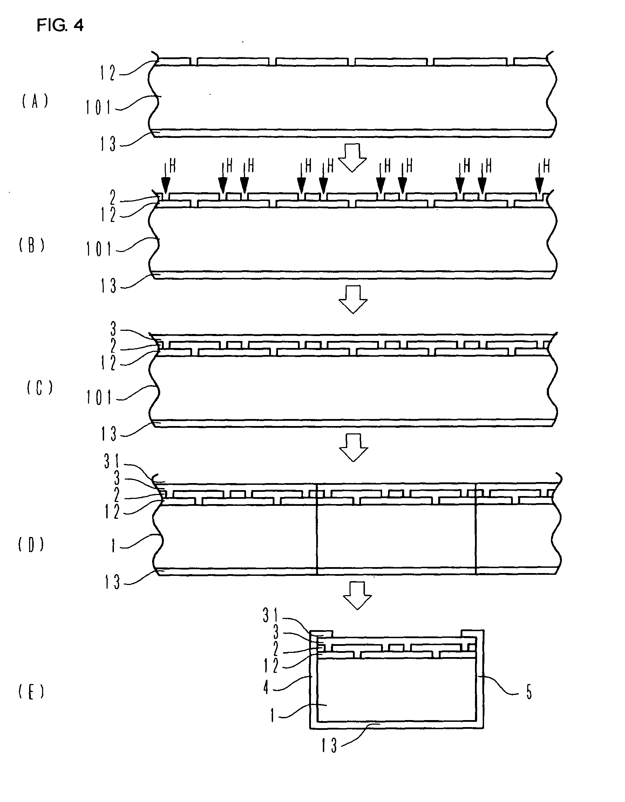

A process of producing the chip component 100 is described. Fig. 4 consists of views illustrating the chip component 100 at each stage of the production process.

In the process of producing the chip component 100, the following steps are performed.
(A) Printing, exposing, and developing using the photolithographic method are performed on the upper principal face of a dielectric motherboard 101 to form a photosensitive silver paste pattern, which is led via baking to form the silver electrode circuit patterns 12. The screen printing is applied on the lower principal face thereof to form a conductive paste pattern, which is led via baking to form the lower face electrode 13 and terminal electrodes (not shown).
(B) Printing, exposing, and developing using the photolithographic method are performed on the upper principal face of the dielectric motherboard 101 to form a photosensitive glass paste pattern, which is led via baking to form the first glass layer 2. Ultraviolet ray irradiation is performed on the first glass layer 2 except for the areas to be the through holes H during the exposure. The glass pastes at the locations corresponding to those of the through holes H are washed and removed during the development. The gas obtained via baking is evacuated from the through holes H, which prevents the gas bubbles from being generated in the vicinity of each of the through holes H, that is, the circuit patterns 12A to 12G. The expansion of the photosensitive glass paste is absorbed at the through holes H. Therefore, the stress produced during the curing thereafter is decreased.
(C) The glass paste is laminated on the upper principal face of the first glass layer 2 using the screen printing to form the second glass layer 3 via the baking. Although the first glass layer 2 expands due to the heat stress during the baking, the through holes H absorb the expansion of the first glass layer 2. The stress caused by this heat stress is therefore decreased.
(D) A plurality of chip components 100 is obtained out of the dielectric motherboard 101 constructed in the above manner.
(E) The silver paste patterns are formed on the sides of the chip component 100 using the screen printing to form the side electrodes 4 and 5 via the baking. Although the first glass layer 2 expands due to the heat stress during the baking, the through holes H absorb the expansion of the first glass layer 2. The stress caused by this heat stress is therefore decreased.

By producing the chip component 100 according to the present embodiment via the above-described steps, a decrease in the yield rate and a decrease in product-to-product (chip components) variations in the electrical characteristics, the frequency characteristics and the like are prevented.

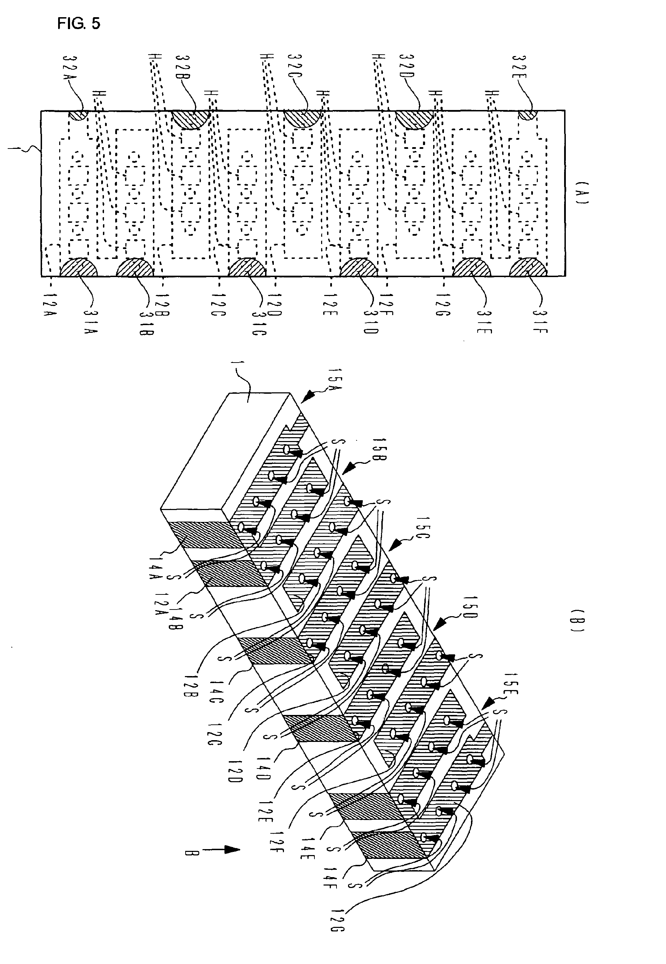

A second embodiment is described with reference to Fig. 5. Fig. 5(A) is a top transparent view of a chip component 200 according to the present embodiment; and Fig. 5(B) is a perspective view of the dielectric substrate 1.

The structure of the chip component 200 according to the present embodiment differs from that of the component 100 in that a plurality of non-electrode containing portions S is provided within the boundaries of the circuit patterns 12A to 12G.

In each of the circuit patterns 12A to 12G provided in the dielectric substrate 1, four non-electrode containing portions are provided so as not to face the through holes H.

A plurality of non-electrode containing portions S is each circular and is provided in the center of the corresponding electrodes. The portions are provided in the center of the electrodes in order to avoid the outer edges of the circuit patterns in which the current concentrates. This prevents variations in the electrical characteristics of the circuit patterns caused by providing the non-electrode containing portions S. In addition, the dielectric substrate 1 and the first glass layer 2 are put in contact with each other via the non-electrode containing portions S. This enables high adhesion strength to be distributed within the circuit patterns. The non-electrode containing portions S may be configured to be rectangular, semiregular, elliptic or the like instead of circular.

Therefore, the chip component according to the present embodiment realizes a further decrease in the occurrences of deformation and partial detachment compared to the first embodiment.

The above description is for illustrative purposes in every aspect and thus considered limiting. The scope of the present invention is indicated by the scope of the claims, not the above embodiments. The scope of the invention is also intended to include meaning equivalent to the scope of the claims and every modification within the scope.

## Claims

1. A chip component comprising a dielectric substrate and a first insulating layer provided on a principal face of the dielectric substrate, wherein a circuit pattern is provided in an interface between the dielectric substrate and the first insulating layer and
wherein the first insulating layer includes a through hole having no conductor therein.

2. The chip component according to Claim 1, further comprising a second insulating layer covering the entirety of the first insulating layer.

3. The chip component according to one of Claims 1 to 2, wherein the through hole is provided in a location facing an area within the boundary of the circuit pattern.

4. The chip component according to one of Claims 1 to 3, wherein a plurality of the through holes are aligned along an extending direction of the circuit pattern.

5. The chip component according to one of Claims 1 to 4, further comprising a non-electrode containing portion within the boundary of the circuit pattern, wherein the dielectric substrate and the first insulating layer contact each other via the non-electrode containing portion.

6. The chip component according to one of Claims 1 to 5, wherein side electrodes are provided in side faces of at least the dielectric substrate and the first insulating layer.

7. The chip component according to one of Claims 1 to 6, wherein the circuit pattern constitutes a resonance line of a stripline resonator.
